# EUROPEAN PATENT SPECIFICATION

(11) **EP 3 136 314 B1**
(45) Date of publication and mention of the grant of the patent: **05.08.2020**
(21) Application number: 15182648.4
(22) Date of filing: 27.08.2015
(51) Int. Cl.: G06Q 10/06, G06Q 50/04

(54) **QUALITY CONTROL SYSTEM FOR A WORKING AREA OF AN OPERATIONAL PROCESS**
QUALITÄTSKONTROLLSYSTEM FÜR EINEN ARBEITSBEREICH EINES BETRIEBSPROZESSES
SYSTÈME DE CONTRÔLE DE LA QUALITÉ D'UNE ZONE DE TRAVAIL D'UN PROCESSUS OPÉRATIONNEL

(43) Date of publication of application: 01.03.2017
(73) Proprietor: Arkite NV, 3600 GENK (BE)
(72) Inventor: De Saeger, Ives, 2620 Hemiksem (BE)
(74) Representative: IP HILLS NV

(56) References cited:
- JP-A- 2012 120 647
- US-A1- 2012 303 336
- US-A1- 2014 259 596
- US-A1- 2014 359 540
- US-A1- 2015 002 419
- Anonymous: "Webcam Zone Trigger Help", OMEGA UNFOLD , 8 March 2015 (2015-03-08), XP002753303, Retrieved from the Internet: URL:http://web.archive.org/web/20150308050 726/http://www.zonetrigger.com/WZThelp/ [retrieved on 2016-01-20]
- Anonymous: "Using Microsoft Kinect with Webcam Zone Trigger software", OMEGA UNFOLD , 6 February 2015 (2015-02-06), XP002753304, Retrieved from the Internet: URL:http://web.archive.org/web/20150206040 313/http://www.zonetrigger.com/articles/Ki nect-software/ [retrieved on 2016-01-20]

## Description

### Technical Field

The disclosure generally relates to the field of systems for controlling quality of a working area. In particular, the disclosure relates to a quality control system for monitoring, controlling, safeguarding, informing, teaching and/or guiding an operator in a working area of an operational process.

### Background

Besides production efficiency, the assurance of the quality of products in highly standardized manufacturing with many standard norms is a permanent concern, e.g. in pharmaceutics, medical, avionics, automotive, etc. The goal is to strive for zero error production. In case of zero error production (cfr. idiot proof or poka yoke), there is a need to check all kinds of components that are critical for the flawless and secure operation of a product, e.g. in the automotive sector, the correct manufacturing resulting in a secure car. To guarantee a perfect quality of the manufactured parts, several quality control systems at the end or at the beginning of the production cycle of the component exist such as a light curtain, 'pick to light'-systems, 'pick to voice'-systems, a vision camera system, sensor systems, etc.

A light curtain typically is an opto-electronic device able to safeguard personnel in the vicinity of moving machinery with the potential to cause harm such as presses, winders or palletisers. A typical problem with a light curtain, is that it will detect if the operator is near or not but it is unable to detect whether an operation is performed correctly or in the right order.

A 'pick to light'-system aids the operator by means of a light signal indicating which part he/she has to take in order not to make a mistake. Document DE202011106404U1 discloses a typical 'pick to light'-system for an assembly process comprising a marking device, e.g. a LED, for lighting parts or tools. Another typical 'pick to light'-system is disclosed in DE10320557B4. Herein a workshop workstation with a working surface, tools and/or components, is read at the individual work steps. The necessary tools and/or parts are lit, the position of a to-install part is displayed and detected optically by means of an above the work surface arranged image capture device. The problem is that 'pick to light'-systems typically check the picking but cannot assure correct positioning of parts.

In a 'pick by voice'-system, a voice orders an operator what to do ('take part A', 'take part B', 'put part A and B in rack', etc.). If the operator makes a mistake, there is no (effective) supervision if the operator has executed these steps in a good manner, even if the operator confirms the end position.

The working area of an operator can also be equipped with sensors, which monitor objects through the production process. As an example, document US2004249606 discloses such a sensor system. These systems are very expensive and complex to implement in a working environment. For example, with e.g. use of different racks, sensor implementation per rack will not be economically feasible. Other examples of systems are described in US2014359540, US2015002419, US2012303336, US2014259596 and the two internet publications entitled respectively "Webcam Zone Trigger Help" published on March 8, 2015 and "Using Microsoft Kinect with Webcam Zone Trigger software" published on February 6, 2015.

Vision systems can also be based on object or contour recognition. A typical example of a contour or outline-based vision system is disclosed in DE102013220107A1. Herein, a method is disclosed for guiding or controlling a workplace. Hereby, contour recognition can be performed on depth data of a workplace from a depth image sensor.

Problem with these systems is typically that they are not adequate in conditions, such as wherein color differences are low (e.g. a black cap on a black background), an object to be detected is not exactly in the right place, a component is formless (e.g. cables, foils, etc., when many components need to be checked (e.g. more than ten), light changes (e.g. extreme sunlight), etc. Vision systems are not flawless. These systems typically work well for 99%. However, an allowable error rate would amount e.g. 100 errors per million, not 1 error in 100. Also, if an operator has to take a part to be bent on a bending machine, turning it upside down can make the bend in the wrong way. Vision systems are focused on a static image (photo).

If the system fails too much because of a false positive (i.e. the system indicates an error, even though the operator can clearly see it is ok) the chance exists that when the system is right, the operator thinks it was wrong, and bypasses it again. Hence, a bad part can reach the client, potentially resulting in a complaint.
Further monitoring systems exist, such as e.g. disclosed in document EP 2053538 A1. Herein an optoelectronic device is disclosed for detecting spatially resolved information for protecting a monitoring range and visual aid for an automated processing.

Alternatively, e.g. document US 2009/0268029 A1 discloses a method and apparatus for safeguarding a dangerous area, by monitoring a three-dimensional spatial area, wherein a virtual protection zone is defined. When an intruding foreign object is detected in or in front of the protection zone, an alarm signal is generated.

Typically, the error rate for the existing vision or monitoring systems is too high compared to the strict fault tolerance in production or manufacturing processes. For example, in automotive processing the error rate typically amounts 1 per million. Also, much variation in products or parts leads to worse recognition by these systems, wherein the allowable degree of variation is usually very low.

Despite these technological aids, regular mistakes still happen as human operators can make mistakes. The errors typically originate from human operators not following a standard or from an inherent error of the control system.

In production or manufacturing processes such as automotive, a lot of effort is put to force the operator to produce according to a standardized work process. Standardized work takes into account the amount of people needed to operate, what the final product looks like, quality check points, tools required to complete the job, etc. Overall, the process should not be ambiguous, in case a technological system needs to verify eventual complex aspects of a process. Not working according to the standard can imply mistakes. Yet many missing non-critical parts and errors in detection technologies still results in severe costs. Today's systems do not result in a reliable verification of e.g. a Standard Operating Procedure.

The number of acceptable errors in the car industry typically is situated around 100 defects per million, but reality learns that often 10 up to 100 mistakes per week with e.g. 3000 parts still happen, especially on non-critical components or parts which are difficult to be recognized by the existing quality control systems.

Another trend is that typically manual operators are replaced by automated operators, such as welding robots, paint robots, etc. Yet, companies that have too much product variation, cannot afford high automatisation systems compared to the volume requested. The known solutions require high cost and provide only relative little flexibility to process or product changes. Setting up a highly qualified staff typically required, as the processes are not fully adapted to the employees.

### Summary

There is a need for an improved quality control system, allowing an increased process reliability, safety and quality of a working area for an operational process.

This objective is achieved, in a first aspect, by a quality control system for monitoring, controlling, safeguarding, informing, teaching and/or guiding an operator in a working area of an operational process according to claim 1.

The system comprises a design module and a workflow module. The design module is configured to predetermine one or more volume objects, each corresponding to a voluminous space within a working area. The design module is also configured to predetermine at least one workflow sequence. A workflow sequence comprises multiple subsequent workflow steps, each workflow step comprising one or more workflow events. A workflow event corresponds to a presence of a physical object or an operational action within a voluminous space corresponding to a volume object. The workflow module is coupled to the design module and to a sensor system. This 3d sensor system is adapted to retrieve 3D observational data from the working area. The workflow module is configured to receive the 3D observational data from the 3d sensor system and observe the one or more volume objects based on the received 3D observational data. The workflow module is further configured to detect a presence of a physical object or an operational action within a voluminous space corresponding to one of the volume objects. The module is configured to create an event if a presence of a physical object or an operational action is detected in a voluminous space corresponding to one of the volume objects and configured to validate the event in view of the predetermined workflow sequence.

It is advantageous as in a working area multiple voluminous spaces can be determined in view of a workflow sequence corresponding to an operational process. Detection of a presence within a voluminous space based on 3D observational data delivered by the 3d sensor system, allows for a simple and contactless check of certain objects or human actions within these voluminous spaces. It allows for dynamically checking the sequence performed by the operator, without the need of the recognition or recording of the operator as such. A whole process can be monitored instead of only securing a small step. Hereby, a standardized workflow can be optimized better. As a presence is checked within a volume, this also allows to deal with a large variation of physical objects. The system allows for an improved handling with respect to e.g. masking, entanglement, flexible objects, cables, black on black, etc. Over all, an improved error rate can be achieved. The predetermined voluminous spaces within a working area, can easily be updated or added in view of changing configurations of the working area or the 3d sensor system.

The term "operational process" in underlying invention should be understood as a process for producing, assembling, manufacturing, handling and/or manipulating one or more goods or products by an operator. The term "operator" in underlying invention should be understood as a human person, a robot, a machine, a group of persons, or a combination thereof.

The term "volume object" in underlying invention should be understood as a variable, a data structure or a function, representing at least a volume corresponding to a voluminous space within a physical working area.

The term "3d sensor system" in underlying invention should be understood as a system comprising one or more sensors, suitable to observe a physical three-dimensional working area and suitable to provide 3D observational data to the quality control system. Preferably, the 3d sensor system comprises at least one range imaging camera. A range imaging camera produces a two-dimensional image showing the distance to points in the working area from a specific point. The resulting image, the range image, has pixel values that correspond to the distance. If the sensor that is used to produce the range image is properly calibrated, the pixel values can be given directly in physical units, such as meters. Exemplary techniques for possible range imaging cameras are inter alia: time-of-flight, stereo triangulation, sheet of light triangulation, structured light, interferometry, coded aperture, etc.

The term "3D observational data" in underlying invention should be understood as data, preferably real-time data, comprising information of the physical three-dimensional working area. In an embodiment, the information comprises a two-dimensional image combined with a distance to points in the working area from a specific point.

According to an embodiment, the 3d sensor system comprises a TOF camera or a combination of two or more TOF cameras.

The term "TOF camera" or "time-of-flight camera " in underlying invention should be understood as a range imaging camera system that resolves distance based on the known speed of light, measuring the time-of-flight of a light signal between the camera and the subject for each point of the image.

According to an embodiment, the 3d sensor system comprises a combination of two or more RGB cameras.

The combination of RGB cameras allows to reconstruct 3D observational data based on produced two-dimensional RGB data by means of a 3D reconstruction.

According to an embodiment, the 3d sensor system comprises a combination of a depth camera and a thermographic camera.

According to an embodiment, the 3d sensor system comprises a CCD camera in combination with a RFID tracking device.

It is advantageous to take into account available RFID data and corresponding localisation information, e.g. originating from a RFID-tagged physical object or operator.

The implementation of a thermographic camera allows for the capturing of the working space wherein working people or operators are unrecognizable. Hereby, privacy of operators within the working area is improved and respected.

According to a preferred embodiment, the thermographic camera concerns a 2D infrared camera.

The term "volume" in underlying invention should be understood as a three-dimensional space within a working area, which is enclosed by a closed boundary, thereby having a three-dimensional shape.

The term "required filling degree" in underlying invention should be understood as a minimum percentage, ratio or indication of how much a voluminous space needs to be filled or taken in by a physical object or human action. For example, a required filling degree of 50%, requires that at least half of the corresponding voluminous space is filled. In case of 3D observational data originating from a TOF camera, this corresponds to 50% of the pixels corresponding to the voluminous space of a volume object, having a (depth) value within the boundaries of the voluminous space.

The term "minimum detection time" in underlying invention should be understood as a minimum time period or amount of frames for a corresponding volume object, wherein a presence of a physical object or an operational action is needed in order to be detected by the workflow module, in order to create the corresponding event. This property allows to set and monitor a minimum time period for a physical object or human act to be measured or detected within a voluminous space, before activating a corresponding event. It is advantageous as it improves the robustness of the workflow module in creating events.

The term "maximum detection time" in underlying invention should be understood as a maximum time period or amount of frames for a corresponding volume object, allowed for a presence of a physical object or an operational action to be detected, in order to create the corresponding event. This property allows to set and monitor a maximum time period for an operator to execute a certain process step.

According to a preferred embodiment, a volume object further comprises at least one of the following properties:
- an occlusion status;
- an activity status;
- a retention time;
- a probing status.

It is advantageous as it improves robustness of the workflow module in creating events.

The term "occlusion status" in underlying invention should be understood as a status corresponding to a volume object, wherein the status represents if currently occlusion is detected by the quality control system for the volume object, or not. For instance, in case an operator stands in front of the voluminous space, corresponding to the volume object, based on the 3D observational data, the system can detect this and set the occlusion status to e.g. 'TRUE'. Otherwise, the occlusion status will be set 'FALSE'.

The term "activity status" in underlying invention should be understood as a status corresponding to a current activity of a volume object.

The term "retention time" in underlying invention should be understood as a minimum period during which a measurement needs to represent a presence a presence in a voluminous space, before it is detected by the system or workflow module. This retention time can be defined by a time value, an amount of frames, MTM values, etc.

The term "probing status" in underlying invention should be understood as a status corresponding to the longest duration of an observed presence with respect to multiple neighbouring voluminous spaces of corresponding multiple volume objects. To avoid quick response triggering of a presence in multiple neighbouring volumes of volume objects, the probe status can be used to set an extra condition before detection of a presence and thereby creation of events. This leads to a more robust approach of creating and validating more accurate events corresponding to a predetermined workflow sequence.

According to a preferred embodiment, a volume object further comprises the following property:
- a noiselucco status.

The term "noiselucco status" in underlying invention should be understood as a status corresponding to a volume object, wherein the status represents if currently something is detected by the quality control system behind the voluminous space of the volume object, or not. For instance, in case an operator stands behind the voluminous space, corresponding to the volume object, based on the 3D observational data, the system can detect this and set the noiselucco status to e.g. 'TRUE'. Otherwise, the noiselucco status will be set 'FALSE'.

According to a preferred embodiment, the volume is defined by a 2D shape and a depth.

According to a preferred embodiment, the volume concerns a geometric volume.

It is advantageous as a geometric volume reduces processing or calculation time.

According to a more preferred embodiment, the geometric volume concerns a box shape, cylinder shape, sphere shape, flat shape, disc shape or arbitrary shape.

According to a preferred embodiment, the volume corresponds to an object-specific shape.

The term "object-specific shape" in underlying invention should be understood as a three-dimensional shape resembling the contour shape of a specific physical object. A volume in the shape of a specific physical object, allows the recognition of the specific object by only detecting the presence of the object within the volume. IN a more preferred embodiment, the object-specific shape corresponds to an enveloping shape of the corresponding physical object. In other words, the shape of the voluminous space corresponds to a shell or hull for the physical object.

According to a more preferred embodiment, the object-specific shape corresponds to an expanded shape of a physical object.

The term "expanded shape" in underlying invention should be understood as a scaled or enlarged three-dimensional shape, i.e. in three dimensions, with respect to the three-dimensional shape of a physical object.

In case of a variety in shape of a physical object to be detected in a voluminous space of a working area, the expanded shape and a required filling degree for the corresponding volume object can be chosen in view of e.g. the variation in size of these objects.

According to a preferred embodiment, a volume of a first volume object can be within or overlap with a volume of a second volume object.

It is advantageous as enclosed or overlapping volumes improve the freedom to define or determine volume objects for a working space and corresponding workflow sequences.

According to an embodiment, a presence of a physical object is detected within a voluminous space corresponding to a volume object based on an observed filling degree within the voluminous space.

It is advantageous as determining and/or calculating a filling degree within a voluminous space reduces complexity of the detection of a specific physical object.

The term "observed filling degree" in underlying invention should be understood as a measured or observed degree, percentage, ratio or indication of how much a voluminous space corresponding to a volume object is filled or taken in by a physical object or human action, based on the 3D observational data.

According to a preferred embodiment, the presence of the physical object is detected if the observed filling degree of the voluminous space exceeds the required filling degree of the volume object.

It is advantageous to set a required filling degree for a physical object to be detected within a voluminous space, leading to a more robust detection mechanism. Hereby, the system can deal with a large variation of physical objects for the same voluminous space, depending on the choice of voluminous space and required filling degree.

According to a preferred embodiment, a presence of a physical object is detected based on:
- a filling degree of the physical object within a voluminous space corresponding to a volume object;
- a depth map of a voluminous space corresponding to a volume object;
- a geometric shape of the physical object within a voluminous space corresponding to a volume object; and/or
- an orientation of the physical object within a voluminous space corresponding to a volume object.

The filling degree, depth map, geometric shape, orientation each improve the recognition of correct placement of physical objects within the voluminous spaces of the working area.

Validation of the events as a good event, helps support standardized work and securing the whole process or workflow sequences.

Validating an event as a bad event when the event is unexpected, allows to provide the working area or an operator a feedback, whereby the incorrect event could be adjusted and corrected into the expected good handling according the predetermined workflow sequence.

According to a more preferred embodiment, wherein, when a bad event is validated, the quality control system is adapted to provide a corresponding alert to the working area.

Providing an alert allows to warn an operator on performing a bad action. Hereby production mistakes and corresponding delays can be reduced and optimized.

According to a preferred embodiment, the event corresponding to a volume object is further validated taking into account at least one of the following properties of the volume object:
- a minimum detection time;
- a maximum detection time;
- an occlusion status;
- an activity status;
- a retention time;
- a probing status.

According to a preferred embodiment, the workflow module is further configured to create an event as a result of a presence of an activity. A presence of an activity can e.g. be detected by means of an interface, such as an I/O module, a scanner, PLC, etc coupled to the system.

According to an embodiment, the design module is further configured to:
i. predetermine one or more anti-volume objects, each corresponding to a voluminous space within a working area;
ii. predetermine at least one workflow sequence, wherein a workflow sequence comprises multiple subsequent workflow steps, each workflow step comprising one or more workflow events, wherein a workflow event corresponds to a presence of a physical object or an operational action within a voluminous space corresponding to a volume object or wherein a workflow event corresponds to an absence of a physical object and an absence of an operational action within a voluminous space corresponding to a anti-volume object; and
the workflow module is further configured to:
i. observe the one or more anti-volume objects based on the received 3D observational data;
ii. detect an absence of a physical object and an absence of an operational action within a voluminous space corresponding to one of the anti-volume objects;
iii. create an event if an absence of a physical object and an absence of an operational action is detected in a voluminous space corresponding to one of the anti-volume objects;
iv. validate the event in view of the predetermined workflow sequence.

The term "anti-volume object" in underlying invention should be understood as a variable, a data structure or a function, representing at least a volume corresponding to a voluminous space within a physical working area.

According to an embodiment, an anti-volume object comprises the following properties:
- a volume corresponding to the voluminous space within the working area;
- a required filling degree for an anti-volume object.

The term "required filling degree for an anti-volume object" in underlying invention should be understood as a maximum percentage, ratio or indication of how little a voluminous space may be filled or taken in by a physical object or human action. For example, a required filling degree of 50%, requires that at least half of the corresponding voluminous space is empty. It is self-evident that an anti-volume object further can comprise properties with a function or purpose, as defined and mentioned in underlying disclosure, analogous to a volume object, such as a minimum detection time, a maximum detection time, an occlusion status, a probe status, etc.

According to an embodiment, the workflow module is further adapted to receive external observational data from the working area and wherein the workflow module is configured to detect a presence of a physical object or an operational action within a voluminous space corresponding to a volume object, based on the 3D observational data and the external observational data from the working area.

Further external observational data allows to improve correct decisions on object detection in the voluminous spaces. The error rate will be further optimized.

The term "external observational data" in underlying invention should be understood as data or signalling from further external sensors with respect to information on a presence of a physical object or human action in one or more voluminous spaces of the working area, which correspond to volume objects.

According to a preferred embodiment, the design module is adapted to determine a coherent set of multiple volume objects.

The term "coherent set of multiple volume objects" in underlying invention should be understood as a set of volume objects that are spatially and/or physically related. For example, a rack with multiple compartments could be represented (predetermined by the design module) by a coherent set of multiple volume objects, wherein these objects correspond to the voluminous spaces of the multiple compartments.

According to a more preferred embodiment, the workflow module is adapted to determine the coherent set of multiple volume objects based on a recognition volume object and/or one or more recognition reference points.

A recognition volume object or recognition reference points allow to recognize a specific coherent set, e.g. a solid rack with compartments. Hereby, alignment of the different voluminous spaces and thereby data accuracy can be improved.

According to a preferred embodiment, the volumes are observed based on calculation and/or averaging of at least part of the 3D observational data.

Averaging of data over time, allows to cope with possibly noisy observational data.

According to an embodiment, a voluminous space corresponding to a volume object can move relatively with respect to a fixed marked point in the working area.

It is advantageous as e.g. in case of assembly or production lines, a static 3d sensor system can be installed in the working space, wherein moving voluminous spaces can be determined, moving at preferably a fixed speed with respect to a marked point in the working area.

According to a preferred embodiment, the workflow module is adapted to perform variation analysis on volume objects.

According to a preferred embodiment, the design module and the workflow module are coupled to a memory database, wherein the design module is configured to store volume objects and workflow sequences into the memory database, and wherein the workflow module is configured to retrieve the volume objects and the workflow sequences from the memory database.

It is advantageous as volume objects and workflow sequences can be stored in e.g. libraries, allowing them to be reused and updated. Determination of these volume objects and workflow sequences preferably is performed by means of a dedicated user interface.

In a second aspect, the underlying invention discloses a computer-implemented method for monitoring, controlling, safeguarding and/or guiding an operator in a working area of an operational process according to claim 9.

### Brief Description of the Drawings

Fig. 1 schematically illustrates a quality control system, according to an embodiment of underlying invention.
Fig. 2 illustrates a method for operating the quality control system of Fig. 1.
Fig. 3 schematically illustrates stored volume objects and workflow sequences in the memory database of Fig. 1.
Figs. 4-6 schematically illustrate validation of events according to a workflow sequence from the memory database of Fig. 3, according to an embodiment of underlying invention.
Figs. 7A and 7B schematically illustrate a retention time for a volume object, according to an embodiment of underlying invention.
Fig. 8 schematically illustrates a probing status for a volume object, according to an embodiment of underlying invention.
Fig. 9 schematically illustrates a set of predetermined volume objects and anti-volume objects, according to an embodiment of underlying invention.
Fig. 10 shows a suitable computing system for hosting the quality control system of Figure 1.

### Detailed Description of Embodiment(s)

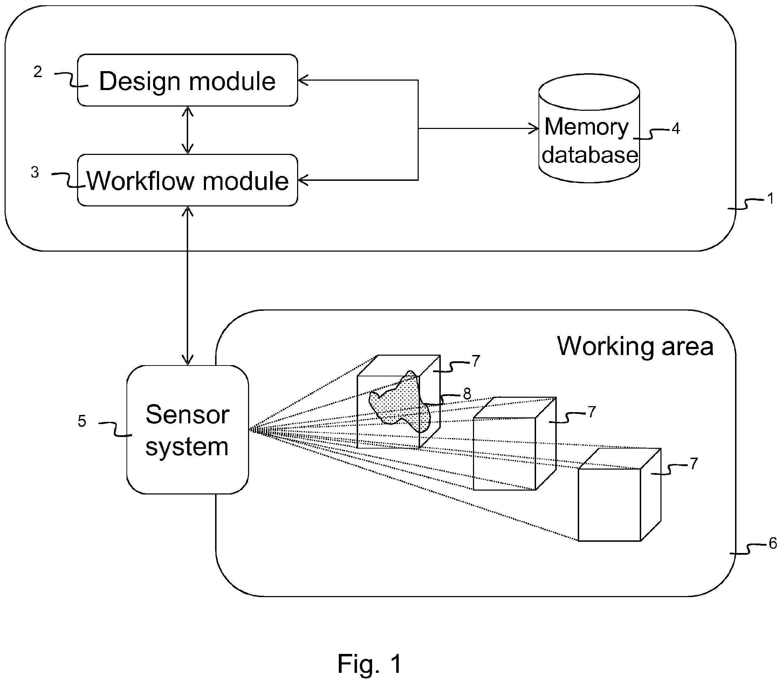

Fig. 1 schematically illustrates a quality control system (1) for monitoring, controlling, safeguarding and/or guiding an operator in a working area (6) of an operational process, according to an embodiment of underlying disclosure.

The system (1) comprises a design module (2), a workflow module (3) and a memory database (4). The workflow module (3) is coupled to the design module (2) and to a 3d sensor system (5). The 3d sensor system (5) retrieves 3D observational data from a working area (6) and provides it to the workflow module (3). The memory database (4) is coupled to the design module (2) and the workflow module (3). Note that in an alternative embodiment, the memory database (4) can be separate from the quality control system (1), whereby the system (1) is coupled to the memory database (4).

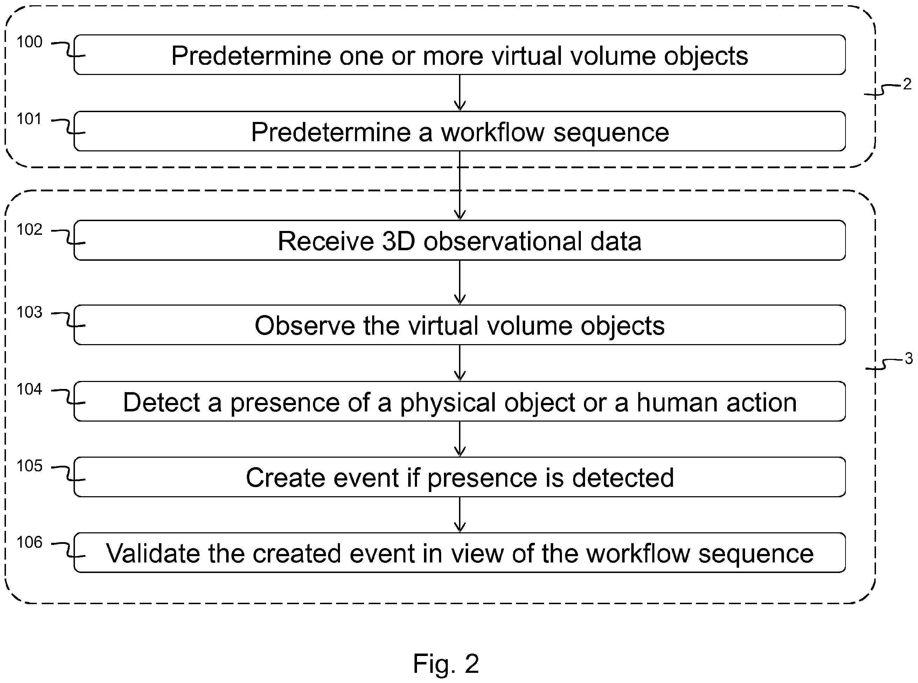

Fig. 2 illustrates a method for operating the quality control system of Fig. 1. In a first step (100), the design module (2) predetermines one or more volume objects (10), each corresponding to a voluminous space (7) within the working area (6). Also, a workflow sequence (20) is defined or predetermined by the design module (2) in step (101). The workflow sequence (20) comprises multiple subsequent workflow steps (21), each comprising one or more workflow events (22). A workflow event (22) corresponds to a presence of a physical object (8) or an operational action within such a voluminous space (7) corresponding to a volume object (10).

Subsequently, the workflow module (3) receives the 3D observational data provided by the 3d sensor system (5) in step (102) and observes the volume objects (10) based on the received 3D observational data in step (103). The workflow module (3) is configured to detect a presence of a physical object (8) or an operational action within a voluminous space (7) corresponding to one of the predetermined volume objects (10). If so (see step 104), then an event (22) is created in step (105). Further, the workflow module (3) will validate the event (22) in view of the predetermined workflow sequence (20) in step (106).

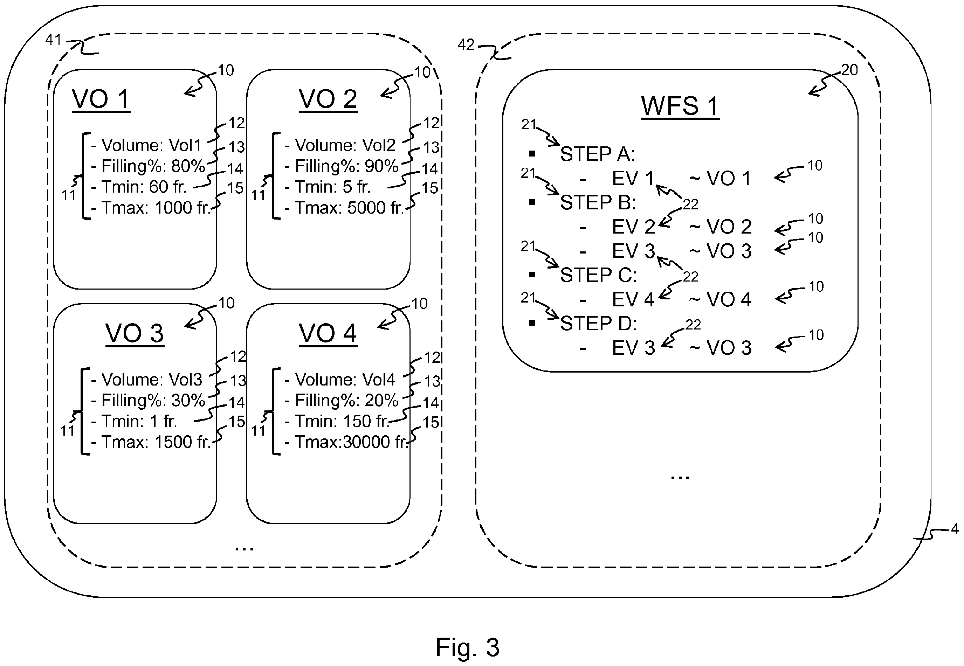

Fig. 3 schematically illustrates stored volume objects (10) and workflow sequences (20) in the memory database (4) of Fig. 1. The memory database (4) comprises a volume object database (41) and a workflow sequence database (42).

The volume object database (41) contains the stored predetermined volume objects (10) 'VO 1', 'VO 2', 'VO 3', 'VO 4', etc. Each volume object (10) contains predetermined properties (11), i.e. a volume (12), a required filling degree (13), a minimum detection time (14) and a maximum detection time (15). For instance, volume object (10) 'VO 1' is defined by a volume (12) 'Vol1' corresponding to a voluminous space (7) within the working area (6), a required filling degree (13) of 80%, a minimum detection time (14) of 60 frames and a maximum detection time (15) of 1000 frames. In case of e.g. a frame rate of 30 frames/second, the minimum detection time (14) equals 2 seconds for volume object (10) 'VO 1'.

The workflow sequence database (42) comprises the workflow sequence (20) 'WFS 1', which contains four subsequent workflow steps (21) A, B, C and D. These steps (21) are related to the workflow events (22) 'EV 1', 'EV 2', 'EV 3', 'EV 4', each corresponding to a presence of a physical object (8) or an operational action within the voluminous space (7) of respectively volume objects (10) 'VO 1', 'VO 2', 'VO 3' and 'VO 4'. 'STEP A' (21) contains one workflow event (22), i.e. 'EV 1'. Subsequent workflow 'STEP B' (21) contains two workflow events (22), i.e. 'EV 2' and 'EV 3'. 'STEP C' (21) contains one workflow event (22), i.e. 'EV 4' and 'STEP D' (21) contains workflow event (22) 'EV 3'. In an embodiment of the underlying invention, a workflow event (22) can also be associated with a presence of physical objects (8) or an operational actions in corresponding multiple voluminous spaces (7) of respectively multiple volume objects and/or in combination with a presence triggered by an external signal, e.g. a scanner.

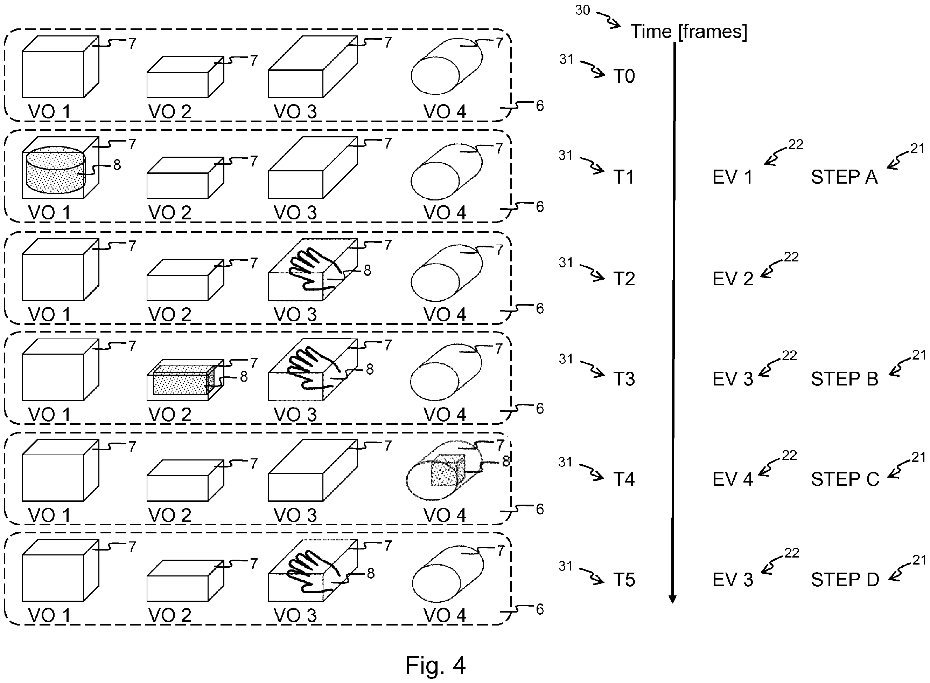

Figure 4 schematically illustrates an observed working space (6) along a time axis (30) with subsequent points of time (31) 'T0', 'T1', 'T2', 'T3', 'T4' and 'T5'. The working space (6) contains the voluminous spaces (7) corresponding to the volume objects (10) 'VO 1', 'VO 2', 'VO 3' and 'VO 4'.

At time T0, all voluminous spaces (7) are e.g. empty and the monitoring of the working space (6) in view of workflow sequence 'WFS1' is started by the workflow module (3). At T1, the module (3) detects that a physical object (8) is present in the voluminous space (7) corresponding to volume object (10) `VO1', for a minimum detection time (14) of 60 frames. Herewith, the workflow module (3) creates the workflow event (22) 'EV1', corresponding to volume object (10) 'VO1'. The module (3) validates if this event (22) is as expected by the predetermined workflow sequence (20) 'WFS1'. In case time T1 would be later than the maximum detection time (15) of 1000 frames after time T0, the operator handled to slow or wrong. A bad event (22) would have been created after 1000 frames after T0. As 'EV1' corresponds to the expected step (21), i.e. 'STEP A', 'EV1' is validated as a good event (22).

Further, at T2, an operational action (8) or 'hand' is detected within the voluminous space (7) corresponding to 'VO3'. At T3, a physical object (8) is detected within the voluminous space (7) corresponding to V02. Together workflow events 'EV2' and 'EV3' correspond to the subsequent workflow step (21) STEP B.

At T4, the presence of a physical object (8) in the voluminous space (7) corresponding to 'VO4' is detected by the workflow module (3). The expected workflow step (21) 'STEP C' has been achieved.

Last, at T5, a presence of the hand (8) triggers again the creation of the event (22) 'EV3', as expected according to workflow step 'STEP D' of the predetermined workflow sequence (20) 'WFS1'. Thereby, the workflow sequence 'WFS1' is executed correctly by the operator.

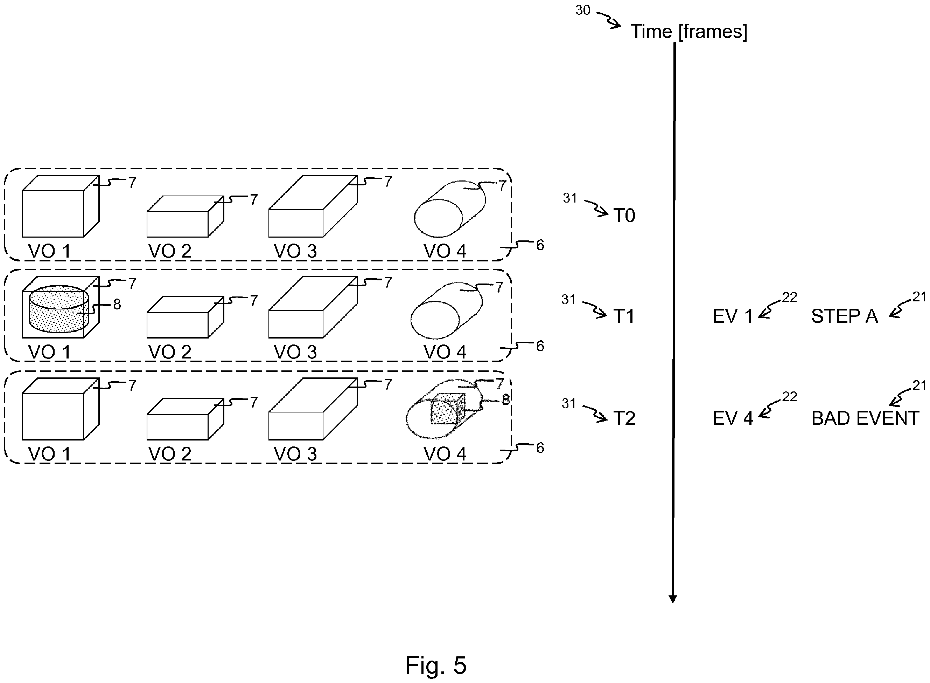

Figure 5 schematically illustrates the same observed working space (6) along the time axis (30) as in Figure 4. At time T0, all voluminous spaces (7) are e.g. empty and the monitoring of the working space (6) in view of workflow sequence 'WFS1' is started by the workflow module (3). At T1, the module (3) detects that a physical object (8) is present in the voluminous space (7) corresponding to volume object (10) `VO1', for a minimum detection time (14) of 60 frames. Herewith, the workflow module (3) creates the workflow event (22) 'EV1', corresponding to volume object (10) 'VO1'. As 'EV1' corresponds to the expected step (21), i.e. 'STEP A', the module (3) validates this event (22) as a good event (22).

Subsequently, at T2, a physical object (8) is provided within the voluminous space (7) corresponding to 'VO4'. Thereby, the event (22) 'EV4' is created by the workflow module (3), but validated as a bad event (22) as event 'EV4' is not according the expected workflow sequence (20) 'WFS1', in fact event (22) 'EV2' is expected. As a result, the quality control system (1) provides an alert to the working area, in view of the operator possibly correcting his/her mistake.

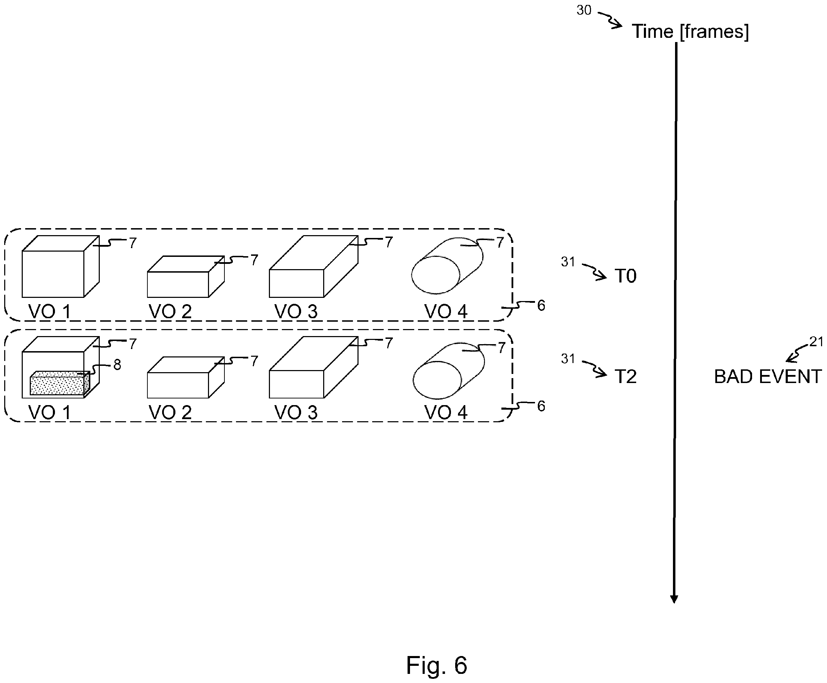

Figure 6 schematically illustrates the same observed working space (6) along the time axis (30) as in Figure 4. At time T0, all voluminous spaces (7) are e.g. empty and the monitoring of the working space (6) in view of workflow sequence 'WFS1' is started by the workflow module (3). At T1, the wrong physical object (8) has been put within the voluminous space (7) corresponding to 'VO1'. As the physical object (8) is too small, and thereby its volume, the observed filling degree is e.g. 30%. As a result, the observed filling degree does not exceed the required filling degree (13) of 80% for 'VO1'. Hence, no event will be created. As the maximum detection time (15) expires, a bad event (22) will be created, and the working area (6) will be alerted.

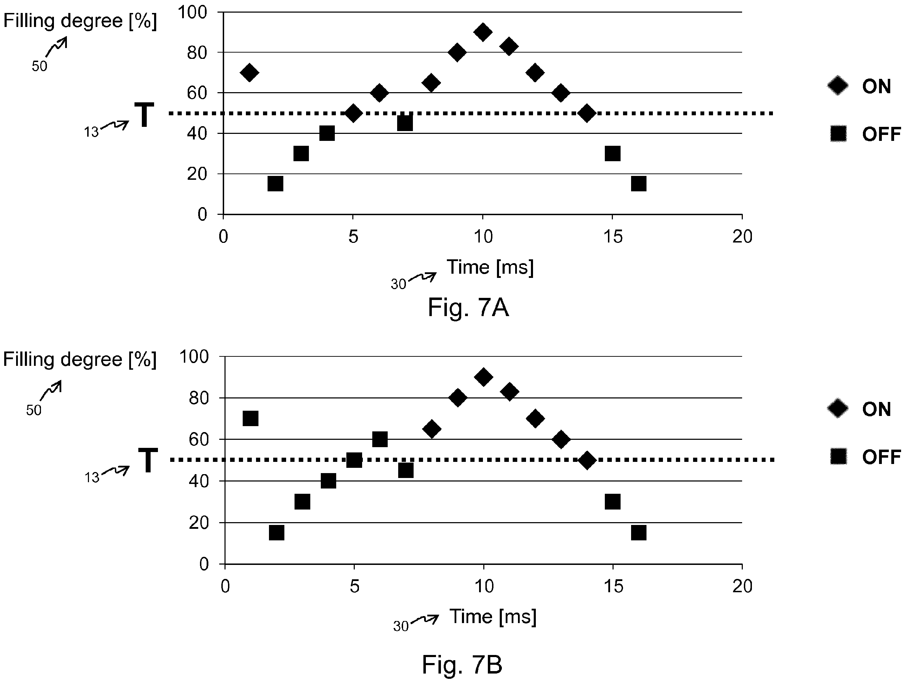

Figures 7A and 7B schematically illustrate respectively the determination of a presence detection without and with the use of a retention time for the corresponding volume object. Figure 7A shows the observed filling degree (50) in function of a time axis (30). Herein, the presence status is set 'ON' or 'OFF', according to respectively the observed filling degree (50) exceeding or not exceeding the required filling degree T (13), which is set to 50%.

Figure 7B shows the same observed filling degree (50) in function of a time axis (30). Herein, the presence status is set 'ON' or 'OFF', taking into account a retention time, which in this example amounts 3ms. Before a presence is set 'ON', the observed filling degree (50) needs to exceed the required filling degree T (13) of 50% during the whole retention time, i.e. 3ms. As a result, the presence status for at times '1ms', '5ms' and '6ms' is set 'OFF' and therefore will not be detected for the corresponding volume object by the workflow module, in contrast to Figure 7A. This is advantageous as quick response triggering of volume objects can be avoided. IN other words, a measurement is determined as a presence after a certain starting period of triggering, the retention time.

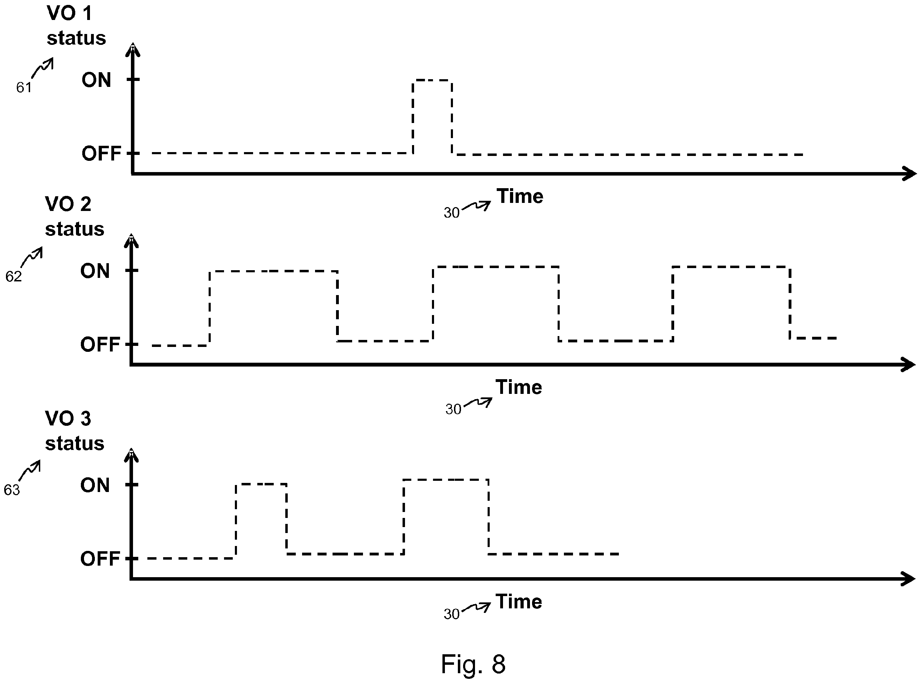

Figure 8 schematically illustrates a probing status for a volume object, according to an embodiment of underlying invention. Figure 8 shows the observed presence status (61), (62) and (63) for respectively volume objects `VO1', 'VO2' and 'VO3', with neighbouring corresponding voluminous spaces. To avoid quick response triggering or detecting a presence in different volume objects, the probe status is set and used in order to determine the presence for the correct volume object. In this example, a presence can be first observed for 'VO2', as a consequence the probe status will be set. Subsequently, a presence is observed for 'VO3', leading to the probe status for 'VO3' to be set. After both observed presences, the duration of the 'probed objects' 'VO2' and 'VO3' is compared, resulting in 'VO2' having the longest duration, and thereby leading to the detection of a presence in the voluminous space corresponding to volume object 'VO2'. In a later stage, all three volume objects `VO1', 'VO2' and 'VO3' show an observed presence. Again, volume object 'VO2' corresponds to the longest duration of all three observed presences for the three volume objects `VO1', 'VO2' and 'VO3'. As a result, a presence will be detected for 'VO2' and not for 'VO1' and 'VO3'. Analogously, a presence status for a volume object could be determined by three states 'ON', 'probed' or 'OFF'.

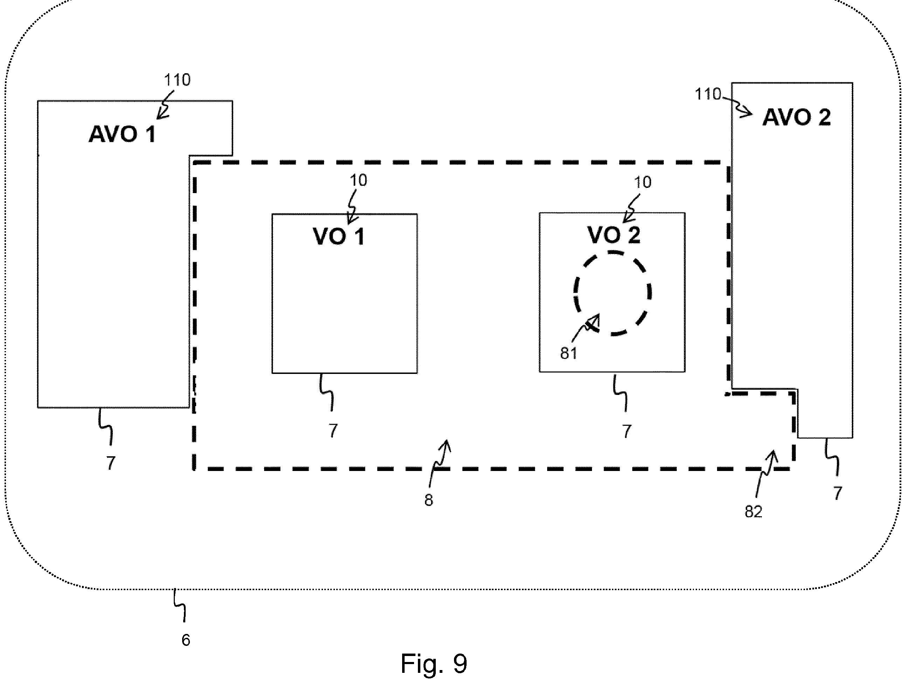

Fig. 9 schematically illustrates in a simplified two-dimensional view, a cross-section of the voluminous spaces (7) for a set of predetermined volume objects (10) and anti-volume objects (10), according to an embodiment of underlying invention. This set comprises volume objects (10) 'VO1' and 'V02', and anti-volume objects (110) 'AVO1' and 'AVO2'. Volume objects (10) 'VO1' and 'VO2' respectively comprise a required filling degree (13) of 99% and 65%. Anti-volume objects (110) 'AVO1' and 'AVO2' respectively comprise a required filling degree (13) of 1% and 1%.

These objects (10) for example respectively correspond to events (22) 'EVVO1', 'EVVO2', 'EVAVO1' and 'EVAVO2'. A workflow step (21) 'STEP' comprises events (22) 'EVVO1', 'EVVO2', 'EVAVO1' and 'EVAVO2'. In order for an operator to execute the correct workflow step 'STEP', the specific physical object (8) has to be placed correctly in the working area (6). Thereto, the observed filling degree for 'VO1' should tend to a total filling of the voluminous space (7) of volume object 'VO1' (10). Physical object (8) has a hole (81), therefore the object (8) should fill the voluminous space (7) for 'VO2' to a minimum of 65%, as the hole (81) decreases the amount of required filling degree (13) e.g. with around 35% of space. Further, the physical object (8) has an extending part (82) and other edges, whereto the voluminous spaces (7) corresponding to the anti-volume objects (110) 'AVO1' and 'AVO2' are adapted. As a matter of fact, if the physical object (8) is placed correctly, than the adjacent voluminous spaces (7) of the anti-volume objects (10) should reach an almost empty filling degree, i.e. so be lower than the required filling degree (13) for anti-volume objects (110) 'AVO1' and 'AVO2' respectively, i.e. 1%.

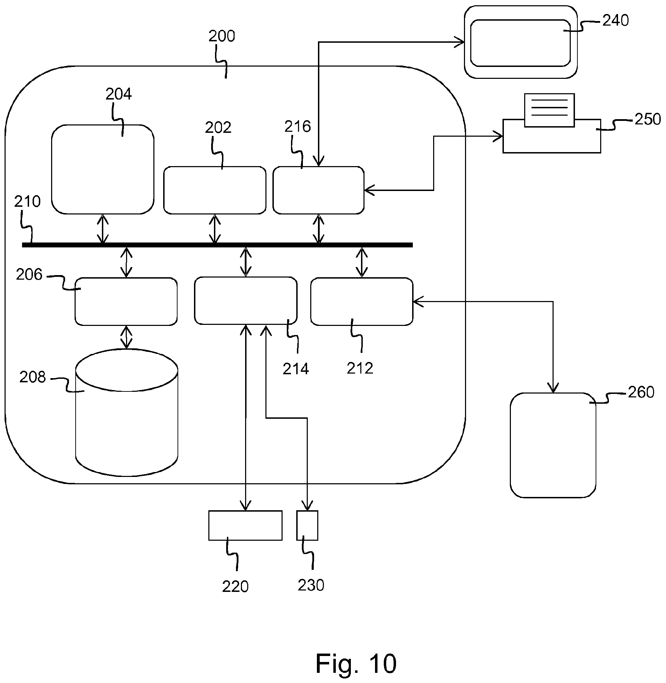

Figure 10 shows a suitable computing system 200 for hosting the quality control system 1 of Figure 1. Computing system 200 may in general be formed as a suitable general purpose computer and comprise a bus 210, a processor 202, a local memory 204, one or more optional input interfaces 214, one or more optional output interfaces 216, a communication interface 212, a storage element interface 206 and one or more storage elements 208. Bus 210 may comprise one or more conductors that permit communication among the components of the computing system. Processor 202 may include any type of conventional processor or microprocessor that interprets and executes programming instructions. Local memory 204 may include a random access memory (RAM) or another type of dynamic storage device that stores information and instructions for execution by processor 202 and/or a read only memory (ROM) or another type of static storage device that stores static information and instructions for use by processor 204. Input interface 214 may comprise one or more conventional mechanisms that permit an operator to input information to the computing device 200, such as a keyboard 220, a mouse 230, a pen, voice recognition and/or biometric mechanisms, etc. Output interface 216 may comprise one or more conventional mechanisms that output information to the operator, such as a display 240, a printer 250, a speaker, etc. Communication interface 212 may comprise any transceiver-like mechanism such as for example two 1Gb Ethernet interfaces that enables computing system 200 to communicate with other devices and/or systems, for example mechanisms for communicating with one or more other computing systems 260. The communication interface 212 of computing system 200 may be connected to such another computing system by means of a local area network (LAN) or a wide area network (WAN, such as for example the internet, in which case the other computing system 260 may for example comprise a suitable web server. Storage element interface 206 may comprise a storage interface such as for example a Serial Advanced Technology Attachment (SATA) interface or a Small Computer System Interface (SCSI) for connecting bus 210 to one or more storage elements 208, such as one or more local disks, for example 1TB SATA disk drives, and control the reading and writing of data to and/or from these storage elements 208. Although the storage elements 208 above is described as a local disk, in general any other suitable computer-readable media such as a removable magnetic disk, optical storage media such as a CD or DVD, -ROM disk, solid state drives, flash memory cards, ... could be used.

The components of the quality control system 1, such as the design module 2, the workflow module 3, etc. can be implemented as programming instructions stored it local memory 204 of the computing system 200 for execution by its processor 202. Alternatively these components could be stored on the storage element 208 or be accessible from another computing system 260 through the communication interface 212. The same holds for the volume objects 7, workflow sequences, observational data, etc., which could also be suitably accessible for processing from the local memory 204, the storage element 208 or another computing system 260, for example comprising a suitable memory database 4.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "i", "ii", "iii", and the like, when used in the description or in the claims are introduced to distinguish between similar elements or steps and are not necessarily describing a sequential or chronological order.

## Claims

1. Quality control system (1) for monitoring, controlling, safeguarding, informing, teaching and/or guiding an operator in a working area (6) of an operational process, wherein said system (1) is coupled to a 3D sensor system (5) adapted to retrieve 3D observational data of said working area (6), said system (1) comprising:
- a design module (2) configured to:
i. predetermine one or more volume objects (10), wherein a volume object (10) corresponds to a variable, a data structure or a function representing at least a volume corresponding to a voluminous space (7) within said working area (6), and comprising the following properties:
- a volume (12) corresponding to said voluminous space (7) within said working area (6);
- a required filling degree (13) corresponding to a minimum percentage, ratio or indication of how much said voluminous space (7) needs to be filled or taken in by a physical object (8) or operational action to detect presence of said physical object (8) or operational action;
- a minimum detection time (14) corresponding to a minimum time period or amount of frames for said volume object (10); and
- a maximum detection time (15) corresponding to a maximum time period or amount of frames for said volume object (10);
ii. predetermine at least one workflow sequence (20) corresponding to said operational process, wherein said workflow sequence (20) comprises multiple subsequent workflow steps (21), each workflow step (21) comprising one or more workflow events (22), wherein a workflow event (22) corresponds to presence of a physical object (8) or execution of an operational action within a voluminous space (7) corresponding to a predetermined volume object (10) of said predetermined volume objects (10);
- a workflow module (3) coupled to said design module (2) and coupled to said 3D sensor system (5), said workflow module (3) being configured to:
i. receive said 3D observational data from said 3D sensor system (5);
ii. observe said one or more predetermined volume objects (10) based on said received 3D observational data;
iii. detect presence of a physical object (8) within a voluminous space (7) corresponding to one of said predetermined volume objects (10) when said required filling degree (13) is observed for said predetermined volume object (10) during at least said minimum detection time (14), or detect execution of an operational action within a voluminous space (7) corresponding to one of said predetermined volume objects (10) when said required filling degree (13) is observed for said one predetermined volume object (10) during at least said minimum detection time (14) and at most said maximum detection time (15);
iv. create an event (22) if presence of a physical object (8) or execution of an operational action is detected in said voluminous space (7) corresponding to said one predetermined volume object (10);
v. validate said event (22) in view of said predetermined workflow sequence (20) as a correct event if said event (22) is in accordance with said predetermined workflow sequence (20) or as an incorrect event if said event (22) is not in accordance with said predetermined workflow sequence (20); and
vi. provide feedback to said operator in order to enable said operator to adjust and correct an incorrect event.

2. System (1) according to claim 1, wherein a predetermined volume object of said predetermined volume objects (10) further comprises at least one of the following properties (11):
- an occlusion status corresponding to a Boolean value indicative for occlusion of the voluminous space corresponding to said predetermined volume object for said 3D sensor system;
- an activity status corresponding to a status corresponding to a current activity of said predetermined volume object;
- a retention time corresponding to a minimum period of observed presence in the voluminous space corresponding to said predetermined volume object before it is detected by said workflow module;
- a probing status corresponding to a longest duration of observed presence across multiple neighboring voluminous spaces of multiple corresponding predetermined volume objects.

3. System (1) according to any of claims 1 to 2, wherein said voluminous space (7) corresponds to an object-specific shape.

4. System (1) according to claim 3, wherein said object-specific shape corresponds to an expanded shape of a physical object being the shape of said physical object scaled or enlarged in three dimensions.

5. System (1) according to any of claims 2 to 4, wherein said event (22) is further validated taking into account at least one of the following properties (11) of said predetermined volume object (10):
- said occlusion status;
- said activity status;
- said retention time;
- said probing status.

6. System (1) according to any of claims 1 to 5, wherein:
- said design module (2) is further configured to:
i. predetermine one or more anti-volume objects, wherein an anti-volume object corresponds to a variable, a data structure or a function representing at least a volume corresponding to a voluminous space (7) within said working area (6), and comprising the following properties:
- a volume (12) corresponding to said voluminous space (7) within said working area (6);
- a required filling degree (13) corresponding to a maximum percentage, ratio or indication of how little said voluminous space (7) may be filled or taken in by a physical object (8) or operational action;
ii. predetermine at least one workflow sequence (20), wherein a workflow event (22) corresponds to absence of a physical object (8) and absence of an operational action within a voluminous space (7) corresponding to a predetermined anti-volume object of said predetermined anti-volume objects;
- said workflow module (3) is further configured to:
i. observe said one or more predetermined anti-volume objects based on said received 3D observational data;
ii. detect absence of a physical object (8) and absence of an operational action within a voluminous space (7) corresponding to one of said predetermined anti-volume objects when a filling level below a required filling degree is observed for said predetermined anti-volume object;
iii. create an event (22) if absence of a physical object (8) and absence of an operational action is detected in a voluminous space (7) corresponding to one of said predetermined anti-volume objects;
iv. validate said event (22) in view of said predetermined workflow sequence (20) as a correct event if said event (22) is in accordance with said predetermined workflow sequence (20) or as an incorrect event if said event (22) is not in accordance with said predetermined workflow sequence (20).

7. System (1) according to any of claims 1 to 6, wherein said design module (2) is adapted to determine a coherent set of multiple predetermined volume objects (10).

8. System (1) according to claim 7, wherein said workflow module is adapted to determine said coherent set of multiple predetermined volume objects (10) based on a recognition volume object and/or one or more recognition reference points.

9. Computer-implemented method for monitoring, controlling, safeguarding and/or guiding an operator in a working area (6) of an operational process, said method comprising the following steps:
- predetermining one or more volume objects (10), wherein a volume object (10) corresponds to a variable, a data structure or a function representing at least a volume corresponding to a voluminous space (7) within said working area (6), and comprising the following properties:
- a volume (12) corresponding to said voluminous space (7) within said working area (6);
- a required filling degree (13) corresponding to a minimum percentage, ratio or indication of how much said voluminous space (7) needs to be filled or taken in by a physical object (8) or operational action to detect presence of said physical object (8) or operational action;
- a minimum detection time (14) corresponding to a minimum time period or amount of frames for said volume object (10); and
- a maximum detection time (15) corresponding to a maximum time period or amount of frames for said volume object (10);
- predetermining at least one workflow sequence (20) corresponding to said operational process, wherein said workflow sequence (20) comprises multiple subsequent workflow steps (21), each workflow step (21) comprising one or more workflow events (22), wherein a workflow event (22) corresponds to presence of a physical object (8) or execution of an operational action within a voluminous space (7) corresponding to a predetermined volume object (10) of said predetermined volume objects (10);
- receiving 3D observational data of said working area (6) from a 3D sensor system (5);
- observing said one or more predetermined volume objects (10) based on said received 3D observational data;
- detecting presence of a physical object (8) within a voluminous space (7) corresponding to one of said predetermined volume objects (10) when said required filling degree (13) is observed for said predetermined volume object (10) during at least said minimum detection time (14), or detecting execution of an operational action within a voluminous space (7) corresponding to one of said predetermined volume objects (10) when said required filling degree (13) is observed for said one predetermined volume object (10) during at least said minimum detection time (14) and at most said maximum detection time (15);
- creating an event (22) if presence of a physical object (8) or execution of an operational action is detected in said voluminous space (7) corresponding to said one predetermined volume object (10);
- validating said event (22) in view of said predetermined workflow sequence (20) as a correct event if said event (22) is in accordance with said predetermined workflow sequence (20) or as an incorrect event if said event (22) is not in accordance with said predetermined workflow sequence (20); and
- providing feedback to said operator in order to enable said operator to adjust and correct an incorrect event.

## Patentansprüche

1. Qualitätskontrollsystem (1) zum Überwachen, Kontrollieren, Sichern, Informieren, Lehren und/oder Anleiten eines Bedieners in einem Arbeitsbereich (6) eines Betriebsprozesses, wobei das System (1) mit einem 3D-Sensorsystem (5) gekoppelt ist, das angepasst ist, um 3D-Beobachtungsdaten vom Arbeitsbereich (6) abzurufen, wobei das System (1) umfasst:
- ein Designmodul (2), das konfiguriert ist, um:
i. ein oder mehrere Volumenobjekte (10) vorzubestimmen, wobei ein Volumenobjekt (10) einer Variablen, einer Datenstruktur oder einer Funktion entspricht, die mindestens ein Volumen repräsentiert, das einem voluminösen Raum (7) im Arbeitsbereich (6) entspricht, und die folgenden Eigenschaften umfasst:
- ein Volumen (12), das dem voluminösen Raum (7) im Arbeitsbereich (6) entspricht;
- einen erforderlichen Füllgrad (13), der einem minimalen Prozentsatz, Verhältnis oder einer Anzeige entspricht, wie sehr der voluminöse Raum (7) durch ein physisches Objekt (8) oder einen Betriebsvorgang gefüllt oder eingenommen werden muss, um das Vorhandensein des physischen Objekts (8) oder des Betriebsvorgangs zu detektieren;
- eine minimale Detektionszeit (14), entsprechend einem minimalen Zeitraum oder einer Menge von Frames für das Volumenobjekt (10); und
- eine maximale Detektionszeit (15), entsprechend einem maximalen Zeitraum oder einer Menge von Frames für das Volumenobjekt (10); und
ii. mindestens eine Arbeitsablaufsequenz (20) vorzubestimmen, die dem Betriebsprozess entspricht, wobei die Arbeitsablaufsequenz (20) mehrere nachfolgende Arbeitsablaufschritte (21) umfasst, wobei jeder Arbeitsablaufschritt (21) ein oder mehrere Arbeitsablaufereignisse (22) umfasst, wobei ein Arbeitsablaufereigniss (22) dem Vorhandensein eines physischen Objekts (8) oder der Ausführung eines Betriebsvorgangs in einem voluminösen Raum (7) entspricht, entsprechend einem vorgegebenen Volumenobjekt (10) der vorbestimmten Volumenobjekte (10);
- ein Arbeitsablaufmodul (3), das mit dem Designmodul (2) gekoppelt ist und mit dem 3D-Sensorsystem (5) gekoppelt ist, wobei das Arbeitsablaufmodul (3) konfiguriert ist, um:
i. die 3D-Beobachtungsdaten vom 3D-Sensorsystem (5) zu empfangen;
ii. das eine oder die mehreren vorbestimmten Volumenobjekte (10) basierend auf den empfangenen 3D-Beobachtungsdaten zu beobachten;
iii. das Vorhandensein eines physischen Objekts (8) in einem voluminösen Raum (7) zu detektieren, das einem der vorbestimmten Volumenobjekte (10) entspricht, wenn der erforderliche Füllgrad (13) für das vorbestimmte Volumenobjekt (10) während mindestens der minimalen Detektionszeit (14) beobachtet wird, oder die Ausführung eines Betriebsvorgangs in einem voluminösen Raum (7) zu detektieren, der einem der vorbestimmten Volumenobjekte (10) entspricht, wenn der erforderliche Füllgrad (13) für das eine vorbestimmte Volumenobjekt (10) während mindestens der minimalen Detektionszeit (14) und höchstens der maximalen Detektionszeit (15) beobachtet wird;
iv. ein Ereignis (22) zu erzeugen, wenn das Vorhandensein eines physischen Objekts (8) oder die Ausführung eines Betriebsvorgangs im voluminösen Raum (7) detektiert wird, das bzw. der dem vorbestimmten Volumenobjekt (10) entspricht;
v. das Ereignis (22) angesichts der vorbestimmten Arbeitsablaufsequenz (20) als ein korrektes Ereignis, wenn das Ereignis (22) im Einklang mit der vorbestimmten Arbeitsablaufsequenz (20) ist, oder als ein inkorrektes Ereignis, wenn das Ereignis (22) nicht mit der vorbestimmten Arbeitsablaufsequenz (20) ist, zu validieren; und
vi. dem Bediener Feedback bereitzustellen, um dem Bediener zu ermöglichen, ein inkorrektes Ereignis anzupassen und zu korrigieren.

2. System (1) nach Anspruch 1, wobei ein vorbestimmtes Volumenobjekt der vorbestimmten Volumenobjekte (10) ferner
mindestens eine der folgenden Eigenschaften (11) umfasst:
- einen Okklusionsstatus entsprechend einem Boolschen Wert, der eine Okklusion des voluminösen Raums entsprechend dem vorbestimmten Volumenobjekt für das 3D-Sensorsystem anzeigt;
- einen Aktivitätsstatus entsprechend einem Status, der einer aktuellen Aktivität des vorbestimmten Volumenobjekts entspricht;
- eine Haltezeit entsprechend einem minimalen Zeitraum beobachteten Vorhandenseins im voluminösen Raum entsprechend dem vorbestimmten Volumenobjekt, bevor es durch das Arbeitsablaufmodul detektiert wird;
- einen Sondierungsstatus entsprechend einer längsten Dauer eines beobachteten Vorhandenseins über mehrere benachbarte voluminöse Räume mehrerer entsprechender vorbestimmter Volumenobjekte.

3. System (1) nach einem der Ansprüche 1 bis 2, wobei der voluminöse Raum (7) einer objektspezifischen Form entspricht.

4. System (1) nach Anspruch 3, wobei die objektspezifische Form einer erweiterten Form eines physischen Objekts entspricht, wobei es sich um die skalierte oder in drei Dimensionen vergrößerte Form des physischen Objekts handelt.

5. System (1) nach einem der Ansprüche 2 bis 4, wobei das Ereignis (22) ferner unter Berücksichtigung mindestens einer der folgenden Eigenschaften (11) des vorbestimmten Volumenobjekts (10) validiert wird:
- der Okklusionsstatus;
- der Aktivitätsstatus;
- die Haltezeit;
- der Sondierungsstatus.

6. System (1) nach einem der Ansprüche 1 bis 5, wobei:
- das Designmodul (2) ferner konfiguriert ist, um:
i. ein oder mehrere Anti-Volumenobjekte vorzubestimmen, wobei ein Anti-Volumenobjekt einer Variablen, einer Datenstruktur oder einer Funktion entspricht, die mindestens ein Volumen repräsentiert, das einem voluminösen Raum (7) im Arbeitsbereich (6) entspricht, und umfassend die folgenden Eigenschaften:
- ein Volumen (12), das dem voluminösen Raum (7) im Arbeitsbereich (6) entspricht;
- einen erforderlichen Füllgrad (13), der einem maximalen Prozentsatz, Verhältnis oder einer Anzeige entspricht, wie wenig der voluminöse Raum (7) durch ein physisches Objekt (8) oder einen Betriebsvorgang gefüllt oder eingenommen werden darf;
ii. mindestens eine Arbeitsablaufsequenz (20) vorzubestimmen, wobei ein Arbeitsablaufereignis (22) einer Abwesenheit eines physischen Objekts (8) und einer Abwesenheit eines Betriebsvorgangs in einem voluminösen Raum (7) entspricht, entsprechend einem vorbestimmten Anti-Volumenobjekts der vorbestimmten Anti-Volumenobjekte;
- das Arbeitsablaufmodul (3) ferner konfiguriert ist, um:
i. das eine oder die mehreren vorbestimmten Anti-Volumenobjekte basierend auf den empfangenen 3D-Beobachtungsdaten zu beobachten;
ii. die Abwesenheit eines physischen Objekts (8) und die Abwesenheit eines Betriebsvorgangs in einem voluminösen Raum (7) zu detektieren, entsprechend dem einen der vorbestimmten Anti-Volumenobjekte, wenn eine Füllhöhe unterhalb eines erforderlichen Füllgrads für das vorbestimmte Anti-Volumenobjekt beobachtet wird;
iii. ein Ereignis (22) zu erzeugen, wenn die Abwesenheit eines physischen Objekts (8) und die Abwesenheit eines Betriebsvorgangs in einem voluminösen Raum (7) detektiert wird, der dem einen der vorbestimmten Anti-Volumenobjekte entspricht;
iv. das Ereignis (22) angesichts der vorbestimmten Arbeitsablaufsequenz (20) als ein korrektes Ereignis, wenn das Ereignis (22) im Einklang mit der vorbestimmten Arbeitsablaufsequenz (20) ist, oder als ein inkorrektes Ereignis, wenn das Ereignis (22) nicht mit der vorbestimmten Arbeitsablaufsequenz (20) ist, zu validieren.

7. System (1) nach einem der Ansprüche 1 bis 6, wobei das Designmodul (2) angepasst ist, um einen kohärenten Satz mehrerer vorbestimmter Volumenobjekte (10) zu bestimmen.

8. System (1) nach Anspruch 7, wobei das Arbeitsablaufmodul angepasst ist, um den kohärenten Satz mehrerer vorbestimmter Volumenobjekte (10) basierend auf einem Erkennungsvolumenobjekt und/oder einem oder mehreren Erkennungsreferenzpunkten zu bestimmen.

9. Computerimplementiertes Verfahren zum Überwachen, Steuern, Sichern und/oder Anleiten eines Bedieners in einem Arbeitsbereich (6) eines Betriebsprozesses, wobei das Verfahren die folgenden Schritte umfasst:
- ein Vorbestimmen eines oder mehrerer Volumenobjekte (10), wobei ein Volumenobjekt (10) einer Variablen, einer Datenstruktur oder einer Funktion entspricht, die mindestens ein Volumen repräsentiert, das einem voluminösen Raum (7) im Arbeitsbereich (6) entspricht, und umfassend die folgenden Eigenschaften:
- ein Volumen (12), das dem voluminösen Raum (7) im Arbeitsbereich (6) entspricht;
- einen erforderlichen Füllgrad (13), der einem minimalen Prozentsatz, Verhältnis oder einer Anzeige entspricht, wie sehr der voluminöse Raum (7) durch ein physisches Objekt (8) oder einen Betriebsvorgang gefüllt oder eingenommen werden muss, um das Vorhandensein des physischen Objekts (8) oder des Betriebsvorgangs zu detektieren;
- eine minimale Detektionszeit (14), entsprechend einem minimalen Zeitraum oder einer Menge von Frames für das Volumenobjekt (10); und
- eine maximale Detektionszeit (15), entsprechend einem maximalen Zeitraum oder einer Menge von Frames für das Volumenobjekt (10); und
- ein Vorbestimmen mindestens einer Arbeitsablaufsequenz (20), die dem Betriebsprozess entspricht, wobei die Arbeitsablaufsequenz (20) mehrere nachfolgende Arbeitsablaufschritte (21) umfasst, wobei jeder Arbeitsablaufschritt (21) ein oder mehrere Arbeitsablaufereignisse (22) umfasst, wobei ein Arbeitsablaufereignis (22) dem Vorhandensein eines physischen Objekts (8) oder der Ausführung eines Betriebsvorgangs in einem voluminösen Raum (7) entspricht, entsprechend einem vorgegebenen Volumenobjekt (10) der vorbestimmten Volumenobjekte (10);
- ein Empfangen von 3D-Beobachtungsdaten des Arbeitsbereichs (6) von einem 3D-Sensorsystem (5);
- ein Beobachten des einen oder der mehreren vorbestimmten Volumenobjekte (10) basierend auf den empfangenen 3D-Beobachtungsdaten;
- ein Detektieren des Vorhandenseins eines physischen Objekts (8) in einem voluminösen Raum (7), das einem der vorbestimmten Volumenobjekte (10) entspricht, wenn der erforderliche Füllgrad (13) für das vorgegebene Volumenobjekt (10) während mindestens der minimalen Detektionszeit (14) beobachtet wird, oder ein Detektieren der Ausführung eines Betriebsvorgangs in einem voluminösen Raum (7), der einem der vorbestimmten Volumenobjekte (10) entspricht, wenn der erforderliche Füllgrad (13) für das eine vorbestimmte Volumenobjekt (10) während mindestens der minimalen Detektionszeit (14) und höchstens der maximalen Detektionszeit (15) beobachtet wird;
- ein Erzeugen eines Ereignisses (22), wenn das Vorhandensein eines physischen Objekts (8) oder die Ausführung eines Betriebsvorgangs im voluminösen Raum (7) detektiert wird, der dem vorbestimmten Volumenobjekt (10) entspricht;
- ein Validieren des Ereignisses (22) angesichts der vorbestimmten Arbeitsablaufsequenz (20) als ein korrektes Ereignis, wenn das Ereignis (22) im Einklang mit der vorbestimmten Arbeitsablaufsequenz (20) ist, oder als ein inkorrektes Ereignis, wenn das Ereignis (22) nicht mit der vorbestimmten Arbeitsablaufsequenz (20) ist; und
- ein Bereitstellen von Feedback an den Bediener, um dem Bediener zu ermöglichen, ein inkorrektes Ereignis anzupassen und zu korrigieren.

## Revendications

1. Système de contrôle de qualité (1) pour surveiller, contrôler, sauvegarder, informer, enseigner et / ou guider un opérateur dans une zone de travail (6) d'un processus opérationnel, dans lequel ledit système (1) est couplé à un système de capteur 3D (5) adapté pour récupérer des données d'observation 3D de ladite zone de travail (6), ledit système (1) comprenant :
- un module de conception (2) configuré pour :
i. prédéterminer un ou plusieurs objets de volume (10), où un objet de volume (10) correspond à une variable, une structure de données ou une fonction représentant au moins un volume correspondant à un espace volumineux (7) à l'intérieur de ladite zone de travail (6), et comprenant les propriétés suivantes :
- un volume (12) correspondant audit espace volumineux (7) à l'intérieur de ladite zone de travail (6) ;
- un degré de remplissage requis (13) correspondant à un pourcentage, rapport ou indication minimum de la quantité dudit espace volumineux (7) qui doit être remplie ou occupée par un objet physique (8) ou une action opérationnelle pour détecter la présence dudit objet physique (8) ou action opérationnelle ;
- un temps de détection minimum (14) correspondant à une période de temps ou quantité d'images minimum pour ledit objet de volume (10); et
- un temps de détection maximum (15) correspondant à une période de temps ou quantité d'images maximum pour ledit objet de volume (10) ;
ii. prédéterminer au moins une séquence de flux de travail (20) correspondant audit processus opérationnel, dans lequel ladite séquence de flux de travail (20) comprend de multiples étapes ultérieures de flux de travail (21), chaque étape de flux de travail (21) comprenant un ou plusieurs événements (22) de flux de travail, dans lequel un événement (22) de flux de travail correspond à la présence d'un objet physique (8) ou à l'exécution d'une action opérationnelle à l'intérieur d'un espace volumineux (7) correspondant à un objet de volume prédéterminé (10) desdits objets de volume prédéterminés (10) ;
- un module de flux de travail (3) couplé audit module de conception (2) et couplé audit système de capteur 3D (5), ledit module de flux de travail (3) étant configuré pour :
i. recevoir lesdites données d'observation 3D dudit système de capteur 3D (5) ;
ii. observer lesdits un ou plusieurs objets de volume prédéterminés (10) sur la base desdites données d'observation 3D reçues ;
iii. détecter la présence d'un objet physique (8) à l'intérieur d'un espace volumineux (7) correspondant à l'un desdits objets de volume prédéterminés (10) lorsque ledit degré de remplissage requis (13) est observé pour ledit objet de volume prédéterminé (10) pendant au moins ledit temps de détection minimum (14), ou détecter l'exécution d'une action opérationnelle dans un espace volumineux (7) correspondant à l'un desdits objets de volume prédéterminés (10) lorsque ledit degré de remplissage requis (13) est observé pour ledit objet de volume prédéterminé (10) pendant au moins ledit temps de détection minimum (14) et au plus ledit temps de détection maximum (15) ;
iv. créer un événement (22) si la présence d'un objet physique (8) ou l'exécution d'une action opérationnelle est détectée dans ledit espace volumineux (7) correspondant audit un objet de volume prédéterminé (10) ;
v. valider ledit événement (22) en vue de ladite séquence de flux de travail prédéterminée (20) comme un événement correct si ledit événement (22) est conforme à ladite séquence de flux de travail prédéterminée (20) ou comme un événement incorrect si ledit événement (22) n'est pas conforme à ladite séquence de flux de travail prédéterminée (20) ; et
vi. délivrer une rétroaction audit opérateur afin de lui permettre d'ajuster et de corriger un événement incorrect.

2. Système (1) selon la revendication 1, dans lequel un objet de volume prédéterminé desdits objets de volume prédéterminés (10) comprend en outre au moins l'une des propriétés suivantes (11) :
- un statut d'occlusion correspondant à une valeur booléenne indicative de l'occlusion de l'espace volumineux correspondant audit objet de volume prédéterminé pour ledit système de capteur 3D ;
- un statut d'activité correspondant à un statut correspondant à une activité actuelle dudit objet de volume prédéterminé ;
- un temps de rétention correspondant à une période minimale de présence observée dans l'espace volumineux correspondant audit objet de volume prédéterminé avant qu'il ne soit détecté par ledit module de flux de travail ;
- un statut de sondage correspondant à une plus longue durée de présence observée à travers de multiples espaces volumineux voisins de multiples objets de volume prédéterminés correspondants.

3. Système (1) selon l'une quelconque des revendications 1 à 2, dans lequel ledit espace volumineux (7) correspond à une forme spécifique à l'objet.

4. Système (1) selon la revendication 3, dans lequel ladite forme spécifique à l'objet correspond à une forme déployée d'un objet physique étant la forme dudit objet physique à l'échelle ou agrandie en trois dimensions.

5. Système (1) selon l'une quelconque des revendications 2 à 4, dans lequel ledit événement (22) est en outre validé en tenant compte d'au moins l'une des propriétés suivantes (11) dudit objet volume prédéterminé (10) :
- ledit statut d'occlusion ;
- ledit statut d'activité ;
- ledit temps de rétention ;
- ledit statut de sondage.

6. Système (1) selon l'une quelconque des revendications 1 à 5, dans lequel :
- ledit module de conception (2) est en outre configuré pour :
i. prédéterminer un ou plusieurs objets anti-volume, où un objet anti-volume correspond à une variable, une structure de données ou une fonction représentant au moins un volume correspondant à un espace volumineux (7) dans ladite zone de travail (6), et comprenant les propriétés suivantes :
- un volume (12) correspondant audit espace volumineux (7) à l'intérieur de ladite zone de travail (6) ;
- un degré de remplissage requis (13) correspondant à un pourcentage, un rapport ou une indication maximum de la petite quantité de remplissage dans laquelle ledit espace volumineux (7) peut être rempli ou occupé par un objet physique (8) ou une action opérationnelle ;
ii. prédéterminer au moins une séquence de flux de travail (20), dans lequel un événement (22) de flux de travail correspond à l'absence d'un objet physique (8) et à l'absence d'une action opérationnelle dans un espace volumineux (7) correspondant à un objet anti-volume prédéterminé desdits objets anti-volume prédéterminés ;
- ledit module de flux de travail (3) est en outre configuré pour :
i. observer lesdits un ou plusieurs objets anti-volume prédéterminés sur la base desdites données d'observation 3D reçues ;
ii. détecter l'absence d'un objet physique (8) et l'absence d'une action opérationnelle à l'intérieur d'un espace volumineux (7) correspondant à l'un desdits objets anti-volume prédéterminés lorsqu'un niveau de remplissage inférieur à un degré de remplissage requis est observé pour ledit objet anti-volume prédéterminé ;
iii. créer un événement (22) si l'absence d'un objet physique (8) et l'absence d'une action opérationnelle sont détectées dans un espace volumineux (7) correspondant à l'un desdits objets anti-volume prédéterminé ;
iv. valider ledit événement (22) en vue de ladite séquence de flux de travail prédéterminée (20) comme un événement correct si ledit événement (22) est conforme à ladite séquence de flux de travail prédéterminée (20) ou comme un événement incorrect si ledit événement (22) n'est pas conforme à ladite séquence de flux de travail prédéterminée (20).

7. Système (1) selon l'une quelconque des revendications 1 à 6, dans lequel ledit module de conception (2) est adapté pour déterminer un ensemble cohérent de multiples objets de volume prédéterminés (10).

8. Système (1) selon la revendication 7, dans lequel ledit module de flux de travail est adapté pour déterminer ledit ensemble cohérent de multiples objets de volume prédéterminés (10) sur la base d'un objet de volume de reconnaissance et / ou d'un ou plusieurs points de référence de reconnaissance.

9. Procédé mis en œuvre par ordinateur pour surveiller, contrôler, sauvegarder et / ou guider un opérateur dans une zone de travail (6) d'un processus opérationnel, ledit procédé comprenant les étapes suivantes :
- la prédétermination d'un ou plusieurs objets de volume (10), dans lequel un objet de volume (10) correspond à une variable, une structure de données ou une fonction représentant au moins un volume correspondant à un espace volumineux (7) à l'intérieur de ladite zone de travail (6), et comprenant les propriétés suivantes :
- un volume (12) correspondant audit espace volumineux (7) à l'intérieur de ladite zone de travail (6) ;
- un degré de remplissage requis (13) correspondant à un pourcentage, rapport ou indication minimum de la quantité dudit espace volumineux (7) qui doit être remplie ou occupée par un objet physique (8) ou une action opérationnelle pour détecter la présence dudit objet physique (8) ou action opérationnelle ;
- un temps de détection minimum (14) correspondant à une période de temps ou quantité d'images minimum pour ledit objet de volume (10); et
- un temps de détection maximum (15) correspondant à une période de temps ou quantité d'images maximum pour ledit objet de volume (10) ;
- prédéterminer au moins une séquence de flux de travail (20) correspondant audit processus opérationnel, dans lequel ladite séquence de flux de travail (20) comprend plusieurs étapes de flux de travail (21), chaque étape de flux de travail (21) comprenant un ou plusieurs événements (22) de flux de travail, dans lequel un événement (22) de flux de travail correspond à la présence d'un objet physique (8) ou à l'exécution d'une action opérationnelle dans un espace volumineux (7) correspondant à un objet de volume prédéterminé (10) desdits objets de volume prédéterminés (10) ;
- recevoir des données d'observation 3D de ladite zone de travail (6) d'un système de capteur 3D (5) ;
- observer lesdits un ou plusieurs objets de volume prédéterminés (10) sur la base desdites données d'observation 3D reçues ;
- détecter la présence d'un objet physique (8) à l'intérieur d'un espace volumineux (7) correspondant à l'un desdits objets de volume prédéterminés (10) lorsque ledit degré de remplissage requis (13) est observé pour ledit objet de volume prédéterminé (10) pendant au moins ledit temps de détection minimum (14), ou détecter l'exécution d'une action opérationnelle dans un espace volumineux (7) correspondant à l'un desdits objets de volume prédéterminés (10) lorsque ledit degré de remplissage requis (13) est observé pour ledit un objet de volume prédéterminé (10) pendant au moins ledit temps de détection minimum (14) et au plus ledit temps de détection maximum (15) ;
- créer un événement (22) si la présence d'un objet physique (8) ou l'exécution d'une action opérationnelle est détectée dans ledit espace volumineux (7) correspondant audit un objet de volume prédéterminé (10) ;
- valider ledit événement (22) en vue de ladite séquence de flux de travail prédéterminée (20) comme un événement correct si ledit événement (22) est conforme à ladite séquence de flux de travail prédéterminée (20) ou comme un événement incorrect si ledit événement (22) n'est pas conforme à ladite séquence de flux de travail prédéterminée (20) ; et
- délivrer une rétroaction audit opérateur afin de lui permettre d'ajuster et de corriger un événement incorrect.
